**Europäisches Patentamt**

**European Patent Office**

**Office européen des brevets**

(19)

(11) Veröffentlichungsnummer: **0 112 295**
**A2**

(12) **EUROPÄISCHE PATENTANMELDUNG**

(21) Anmeldenummer: **83810589.8**

(22) Anmeldetag: **14.12.83**

(51) Int. Cl.³: **A 47 J 27/088**
**H 05 B 6/64**

(30) Priorität: **15.12.82 CH 7302/82**

(43) Veröffentlichungstag der Anmeldung:
**27.06.84 Patentblatt 84/26**

(84) Benannte Vertragsstaaten:
**DE FR GB**

(71) Anmelder: **Gigatherm Mikrowellen AG**
**Halten**
**CH-9035 Grub(CH)**

(72) Erfinder: **Sanwald, Willy**
**Hord**
**CH-9035 Grub(CH)**

(74) Vertreter: **Blum, Rudolf Emil Ernst**
**c/o E. Blum & Co Patentanwälte Vorderberg 11**
**CH-8044 Zürich(CH)**

(54) **Druckgefäss für Nahrungsmittel zur Verwendung in einem Mikrowellenfeld.**

(57) Das Gefäss besitzt einen Behälter (1) mit einem druckdicht aufsetzbaren Deckel (2). Behälter und Deckel bestehen aus Mikrowellen-durchlässigem Material, wie Polypropylen. Eine Dichtung (3) aus Silikongummi stellt den druckdichten Deckelverschluss sicher. Das Gefäss wird zum Zubereiten, z.B. Auftauen und Garen von Nahrungsmitteln in ein Mikrowellenfeld gebracht. Die Mikrowellen bewirken einerseits die Verdampfung des im Gefäss befindlichen Wassers und somit einen Druckaufbau. Andererseits werden die Nahrungsmittel durch direkte Mikrowelleneinwirkung schonend erwärmt. Die Anordnung erlaubt ein schonendes und energiesparendes Zubereiten von Nahrungsmitteln in kurzer Zeit.

Fig.1

EP 0 112 295 A2

- 1 -

Druckgefäss für Nahrungsmittel zur
Verwendung in einem Mikrowellenfeld

-----------------------------------------------

Die Erfindung betrifft ein Dampfdruckgefäss für die Zubereitung von Nahrungsmitteln, mit einem Behälter und einem druckdicht aufsetzbaren Deckel, sowie dessen Verwendung in einem Mikrowellengerät.

Es ist bekannt, dass Nahrungsmittel unter dem Einfluss von Mikrowellen schonend und in kurzer Zeit aufgetaut und gegart werden können. Dabei werden die Wasser- und Fettmoleküle in den Nahrungsmitteln von den eindringenden Mikrowellen angeregt, woraus sich ein Erwärmungseffekt ergibt. Andererseits ist es ebenfalls bekannt, Nahrungsmittel im Dampfkochtopf unter Ueberdruck im Wasserdampf zu garen. Dabei wird die Wärme in der Regel durch Wärmeleitung auf den Dampfkochtopf übertragen und unter dem Einfluss dieser Wärme Wasser verdampft, was eine relativ lange Aufwärmzeit beansprucht und Energieverluste nach sich zieht. Mit der Erfindung wird bezweckt, diese Nachteile zu vermeiden.

Dies gelingt mittels eines Dampfdruckgefässes nach Anspruch 1 und dessen Verwendung in einem Mikrowellengerät.

Dabei wird der Wasserdampf unmittelbar durch die Einwirkung von Mikrowellen auf im Gefäss befindliches Wasser erzeugt. Die Wirkung auf das Kochgut ist damit eine zweifache: einerseits direkte Mikrowellenbestrahlung und -absorption und andererseits Einwirkung des Wasserdampfes unter Ueberdruck und erhöhter Umgebungstemperatur. Damit gelingt es, Lebensmittel schonend und energiesparend in kurzer Zeit aufzutauen und zu garen.

Vorzugsweise ist das ganze Druckgefäss, d.h. Deckel und Behälter aus Polypropylen ausgebildet. Dieses hat den Vorteil geringer Porosität (im Vergleich etwa zu ebenfalls verwendbaren Keramik), so dass sich keine Fettanlagerungen in den Wänden bilden können, welche Mikrowellenenergie absorbieren und damit zu starken Erwärmungen in den Wänden führen würden. Im Vergleich zum ebenfalls verwendbaren Glas besitzt Polypropylen bessere mechanische Eigenschaften als Material für Druckgefässe.

Nachfolgend wird ein Ausführungsbeispiel der Erfindung anhand der beiliegenden Zeichnung näher beschrieben. Darin zeigen:

Fig. 1 eine Schnittansicht eines Dampfdruckgefässes nach der Erfindung;

Fig. 2 eine Aufsicht auf das Gefäss nach Fig. 1;

Fig. 3 eine Ueberdruckzwangssicherung in Schnittansicht zur Anbringung am Dampfdruckgefäss nach Fig. 1;

Fig. 4 ein einstellbares Ueberdruckventil in Schnittansicht zur Anbringung am Dampfdruckgefäss nach Fig. 1, und

Fig. 5 eine Schnittansicht einer weiteren Ausführungsform der Erfindung.

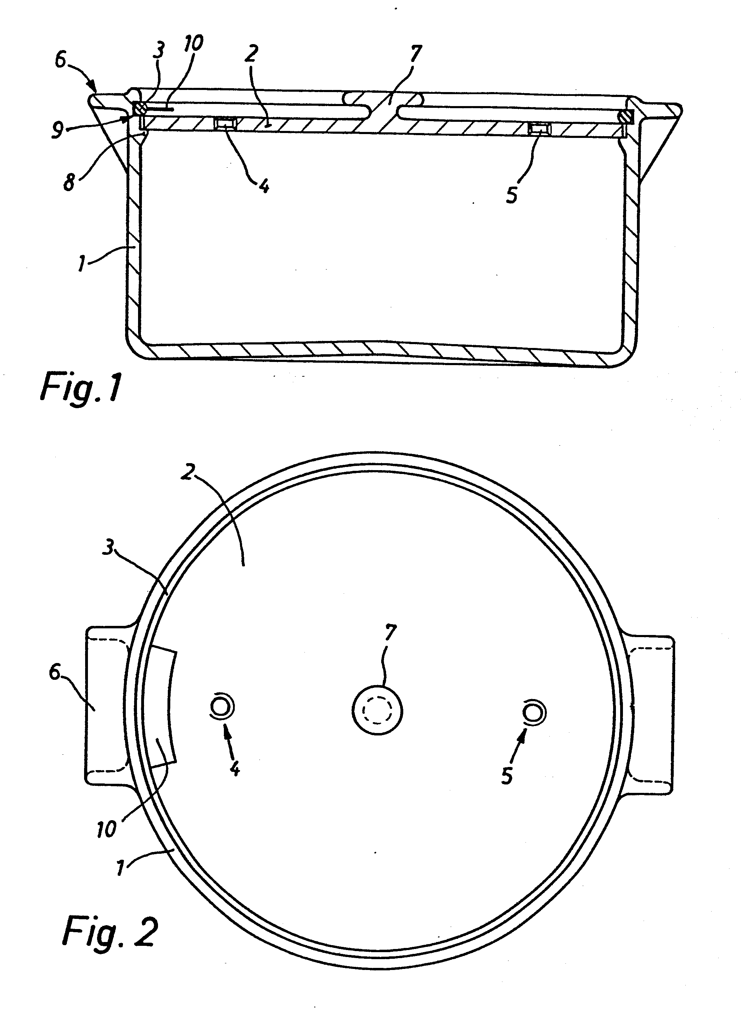

In den Fig. 1 und 2 ist eine Ausführung des erfindungsgemässen Dampfdruckgefässes gezeigt, das einen Behälter 1 und einen druckdicht darauf aufsetzbaren Deckel 2 besitzt. Deckel und Behälter sind aus Polypropylen gespritzt und weisen eine Wandstärke von ca. 10 mm auf. Die Grundrissform des Gefässes ist kreisrund, was eine optimale Kräfteverteilung im Druckzustand gewährleistet. Da die Wärmeübertragung nicht durch die Gefässwände, z.B. den Boden, erfolgt, sondern die Wärmeerzeugung im Gefäss selbst stattfindet, ist die Auslegung der Gefässform nicht durch diesbezügliche Anforderungen beschränkt. Insbesondere kann der Behälterboden leicht gewölbt ausgebildet sein, um gute Standeigenschaften zu erreichen.

Wie aus Fig. 1 ersichtlich ist, ist in die Behälterwand 1 innenseitig ein ringartiger Vorsprung 8 als Auflager für den Deckel 2 eingeformt. Um die Deckelwandstärke nach oben versetzt, verläuft eine Nut 8 in der Behälterwand zur Aufnahme eines Dichtungsringes 3 mit Zuglasche 10. Der Dichtungsring mit Lasche besteht aus Silikongummi, dessen Materialeigenschaften zum Einsatz im Mikrowellenfeld geeignet sind. Beim Aufbau des Dampfdruckes im Gefäss wird der Deckel 2 nach oben gegen den Dichtungsring 3 gepresst, wodurch ein druckdichter Abschluss entsteht. An der Behälteraussenseite sind zwei Traggriffe 6 angeformt, welche einen Stiel überflüssig machen. Dies erlaubt eine bessere Raumausnutzung im Mikrowellengerät.

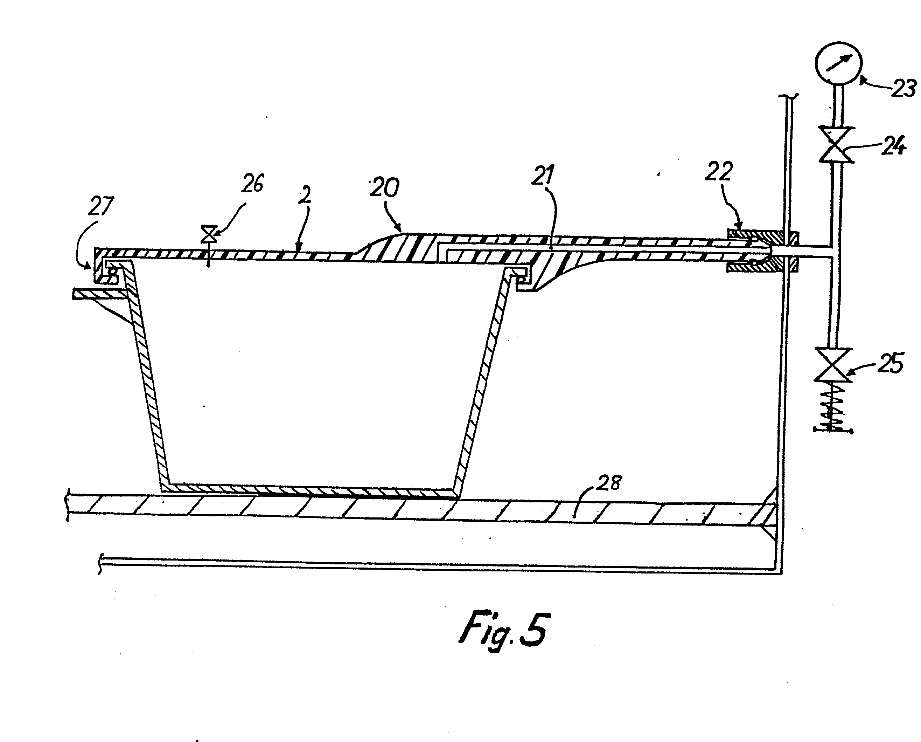

Als mögliche Abwandlung des beschriebenen Ausführungsbeispieles kann der Deckel 2 und der Rand des Behälter auch derart geformt sein, dass der Deckel den Behälterrand übergreift und in der Art eines Bajonettverschlusses daran befestigbar ist. Bei einer solchen, konstruktiv aufwendigeren Ausführung sind allerdings Stiele an Behälter und Deckel vorzusehen, welche das Befestigen und Lösen des Deckels erlauben (Fig. 5).

Bei dem in den Fig. 1 und 2 gezeigten Ausführungsbeispiel ist der Deckel 2 im wesentlichen eben ausgebildet und besitzt einen zentralen Griff 7 zum Aufsetzen und Abheben des Deckels. Ferner sind darin Bohrungen 4 und 5 zur Montage einer Ueberdruckzwangssicherung 11 und eines einstellbaren Ueberdruckventils angeordnet.

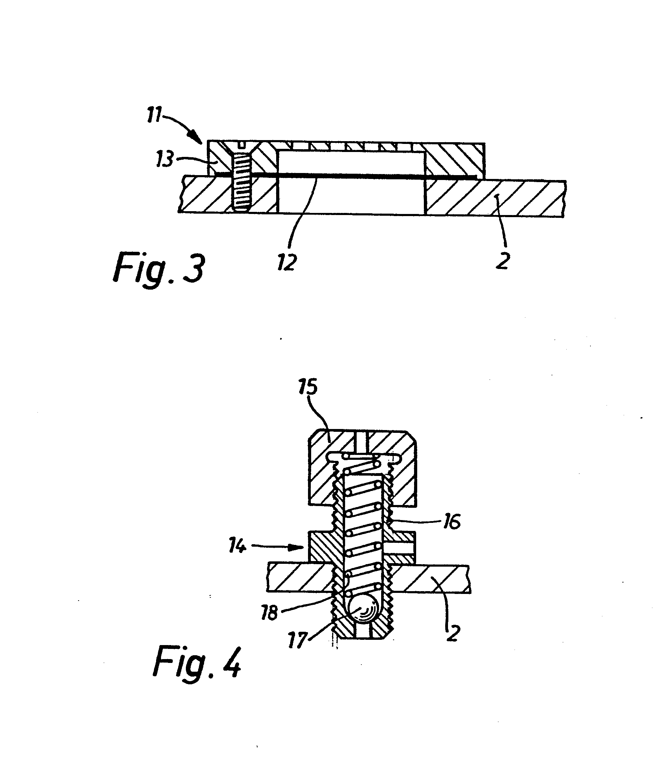

Die Ueberdruckzwangssicherung 11 (Fig. 3) besteht aus einer Brechplatte 12 aus Kunststoff, über welcher ein Schutzdeckel 13, ebenfalls aus Kunststoff, am Deckel 2 festgeschraubt ist. Die Brechplatte 12 ist so dimensioniert, dass sie bei 1.5 bar öffnet, falls das Ueberdruckventil versagt oder ein plötzlicher starker Druckanstieg auftritt. Die gebrochene Brechplatte 12 kann leicht ausgewechselt werden.

Das Ueberdruckventil 14 (Fig. 4) wird in eine der Bohrungen 4,5 eingeschraubt. Es ist stufenlos auf Drucke zwischen 0 und 1.1 bar einstellbar, indem die Vorspannung einer Ventilfeder 18, die einen Ventilkörper 17 gegen den Ventilseitz presst, durch mehr oder weniger tiefes Einschrauben eines Ventildeckels 15 verstellbar ist.

Bei einem nicht gezeigten Ausführungsbeispiel weist der Deckel 2 überdies eine Kupplung zum Anschluss eines Druckschlauches aus dickwandigem Silikongummi auf. Der Schlauch wird an ein Manometer angeschlossen, das im Mikrowellengerät vorgesehen und von aussen beobachtbar ist. Diese Massnahme ist insbesondere bei grossvolumigen Gefässen zur Verwendung in der Gastronomie und Industrie vorteilhaft, indem eine Ueberwachung des Druckverlaufes möglich ist.

In Fig. 5 ist eine weitere Ausführung dargestellt, welche im wesentlichen der vorbeschriebenen entspricht, so dass hier nur auf die Abwandlungen vom Beschriebenen eingegangen wird. Das Druckgefäss weist einen Deckel 2 mit einem Stiel 20 auf, in den ein Druckanschluss 21 integriert ist. Eine entsprechende Bohrung verbindet den Innenraum des Druckgefässes mit einer Mündung am Ende des Stiels 20. Damit wird das Gefäss beim Einschieben auf der Bodenplatte 28 in den Mikrowellenherd mittels einer an der Rückwand des Herdes angeordneten, dichtenden Schnellkupplung 22 mit einer Leitung im Herd verbunden, die einerseits über ein Ventil 24 zu einem Manometer 23 führt und andererseits mit einer Druckablassanordnung 25 verbunden ist. Die Druckablassandordnung 25 weist ein Ventil auf, das durch das Oeffnen der Garraumtüre des Herdes geöffnet wird, so dass eine Druckentlastung im Gefäss 2 stattfindet. Danach kann das Gefäss drucklos aus der Schnellkupplung 22 gezogen und unmittelbar geöffnet werden, da es durch die Bohrung mit der Aussenseite verbunden ist. Das Gefäss kann statt mit einer Brechplatte mit einem Sicherheitsventil 26 versehen sein.

Diese Ausführung hat den Vorteil einer gefahrlosen Verwendung auch durch Laien, indem sich beim Oeffnen der Garraumtüre automatisch eine Druckentlastung einstellt.

Für den Betrieb werden die mit dem Kochgut und etwas Wasser versehenen Gefässe verschlossen und in ein Mikrowellengerät an sich bekannter Bauart eingesetzt. Im Mikrowellenfeld wird das Wasser bis zur Dampfbildung erwärmt. Bei einem Dampfüberdruck von ca. 1.1 bar beträgt die Dampftemperatur ca. 130$^{\circ}$ C. Zugleich wird das Kochgut durch die Mikrowellen direkt erhitzt. Die Kombination der beiden Einwirkungen gewährleistet ein schonendes, energiesparendes Auftauen und Garen des (ev. tiefgefrorenen) Kochgutes.

Da die Einwirkung der Mikrowellen auf das Wasser bzw. den Dampf direkt erfolgt, die Wärme also nicht durch Wärmeleitung zugeführt wird, kann der Dampfdruck bzw. die Dampftemperatur rascher beeinflusst werden, als bei herkömmlichen Dampfkochgefässen.

Das beschriebene Gefäss kann in Mikrowellengeräten für den Haushalt, die Gastronomie sowie die
Industrie verwendet werden, wobei sein Volumen dem zur
Verfügung stehenden Mikrowellengerät angepasst ist.
Es verlangt keine besondere Anordnung
des Mikrowellenfeldes, weil das Gefäss selbst das Feld
nicht wesentlich beeinflusst.

- 1 - 0112295

Patentansprüche
------------------------------

1. Druckgefäss für die Zubereitung von Nahrungsmitteln, mit einem Behälter (1) und einem druckdicht aufsetzbaren Deckel (2), dadurch gekennzeichnet, dass mindestens der Deckel (2) zur Verwendung in einem ausserhalb des Gefässes erzeugten Mikrowellenfeld aus Mikrowellen-durchlässigem Material besteht.

2. Druckgefäss nach Anspruch 1, dadurch gekennzeichnet, dass der Behälter (1) aus Mikrowellendruchlässigem Material besteht.

3. Druckgefäss nach einem der vorangehenden Ansprüche, dadurch gekennzeichnet, dass als Mikrowellen-durchlässiges Material Kunststoff, vorzugsweise Polypropylen, vorgesehen ist.

4. Druckgefäss nach einem der vorangehenden Ansprüche, dadurch gekennzeichnet, dass am Deckel (2) ein Druckventil (14) angeordnet ist, mittels welchem der Ueberdruck im Druckgefäss einstellbar ist.

5. Druckgefäss nach einem der vorangehenden Ansprüche, dadurch gekennzeichnet, dass am Deckel eine Ueberdruckzwangssicherung (11) angeordnet ist.

6. Druckgefäss nach einem der vorangehenden Ansprüche, dadurch gekennzeichnet, dass zur Abdichtung ein zwischen dem Deckel und dem Behälter unter Druckbelastung einklemmbarer Dichtungsring (13) aus Silikongummi vorgesehen ist.

7. Druckgefäss nach einem der vorangehenden Ansprüche, dadurch gekennzeichnet, dass am Behälter oder am Deckel eine Kupplung zum Anschluss eines Schlauches, vorzugsweise aus Silikon, vorgesehen ist, um das Innere des Druckgefässes mit einem Manometer zu verbinden.

8. Druckgefäss nach einem der vorangehenden Ansprüche, dadurch gekennzeichnet, dass es einen Anschluss (21) für eine äussere Druckmess- bzw. Druckablassanordnung (23,25) aufweist.

9. Druckgefäss nach Anspruch 8, dadurch gekennzeichnet, dass der Anschluss am Ende eines mit dem Deckel (2) verbundenen Handgriffes (20) nach aussen mündet.

10. Verwendung des Druckgefässes nach einem der vorangehenden Ansprüche in einem Mikrowellenfeld.

11. Verwendung nach Anspruch 10, wobei das Druckgefäss einen Anschluss (21) für eine äussere Druckmess- bzw. Druckablassanordnung (23,25) aufweist, dadurch gekennzeichnet, dass ein Mikrowellenherd ein mit dem Anschluss (21) verbindbares Manometer (23) sowie eine Druckablassanordnung (25) aufweist, wobei die Druckablassanordnung derart mit der Garraumtüre des Mikrowellenherdes verbunden ist, dass deren Oeffnen eine Druckentlastung des Druckgefässes bewirkt.

**Fig.1**

**Fig. 2**

0112295

Fig. 3

Fig. 4

0112295

Fig.5